# EUROPEAN PATENT APPLICATION

(11) **EP 4 746 055 A1**
(43) Date of publication of application: **20.05.2026**
(21) Application number: 25215103.0
(22) Date of filing: 11.11.2025
(51) Int. Cl.: H01M 4/04, H01M 4/133, H01M 4/1393

(54) **ANODE ACTIVE MATERIAL FOR LITHIUM SECONDARY BATTERY AND LITHIUM SECONDARY BATTERY INCLUDING THE SAME**

(30) Priority: 11.11.2024 KR 20240159255; 31.10.2025 KR 20250162135
(71) Applicant: SK On Co., Ltd., Seoul 03161 (KR); SK innovation Co., Ltd., Seoul 03188 (KR)
(72) Inventor: KIM, Nak Won, Daejeon 34124 (KR); PARK, Gwi Ok, Daejeon 34124 (KR); YU, Do Ae, Daejeon 34124 (KR); CHOI, Jae Young, Daejeon 34124 (KR)
(74) Representative: Stolmár & Partner Patentanwälte PartG mbB

(57) **Abstract**

According to embodiments of the present disclosure, an anode active material for a lithium secondary battery includes composite particles including carbon-based particles having pores and a silicon-containing coating disposed on the surface of the carbon-based particles, wherein the ratio of oxygen atoms to silicon atoms (O/Si atomic ratio), measured by X-ray photoelectron spectroscopy (XPS) analysis at a depth of 100 nm from the surface toward the center of the composite particles, is 0.13 to 0.6.

## Description

### [BACKGROUND OF THE INVENTION]

### 1. Field of the Invention

The disclosure of the present application relates to an anode active material for a lithium secondary battery, a method for preparing the same, and a lithium secondary battery including the anode active material.

### 2. Description of the Related Art

Secondary batteries are batteries that can be repeatedly charged and discharged. With the development of information and communication and display industries, they have been widely applied as power sources for portable electronic communication devices, such as camcorders, mobile phones, and laptop PCs. In addition, battery packs including secondary batteries have recently been developed and applied as power sources for eco-friendly vehicles, such as electric vehicles.

Examples of secondary batteries may include a lithium secondary battery, a nickel-cadmium battery, and a nickel-hydrogen battery. Among these, the lithium secondary battery is actively developed and applied due to its high operating voltage, high energy density per unit weight, and advantages in charging speed and weight reduction.

Recently, as the application scope of lithium secondary batteries continues to expand, development for a lithium secondary battery having a higher capacity and output is progressing. For example, high-capacity silicon and carbon composites may be used as anode active materials.

However, silicon-carbon composite anode active materials exhibit large differences in volume expansion, which may lead to cracks and exposure of the anode active material to the electrolyte during repeated charge and discharge cycles.

### [SUMMARY OF THE INVENTION]

According to an aspect of the present disclosure, an anode active material for a lithium secondary battery with improved cycle life characteristics may be provided.

According to another aspect of the present disclosure, a lithium secondary battery with improved cycle life characteristics may be provided.

Further, according to another aspect of the present disclosure, a method for preparing an anode active material for a lithium secondary battery with improved cycle life characteristics may be provided.

According to the present disclosure, there is provided an anode active material for a lithium secondary battery including: carbon-based particles including pores; and composite particles including a silicon-containing coating disposed on the surface of the carbon-based particles, wherein the ratio of oxygen atoms to silicon atoms (O/Si atomic ratio), measured by X-ray photoelectron spectroscopy (XPS) analysis at a depth of 100 nm from the surface toward the center of the composite particles, is 0.13 to 0.6.

In some embodiments, the O/Si atomic ratio may be 0.16 to 0.43.

In some embodiments, the pores of the carbon-based particles may have a size of 0.1 nm to 10 nm.

In some embodiments, the pores of the carbon-based particles may have a size of 1 nm to 5 nm.

In some embodiments, the composite particles may further include a carbon coating disposed on the silicon-containing coating.

In some embodiments, the carbon coating may include at least one selected from the group consisting of amorphous carbon and a conductive polymer.

In some embodiments, the pores of the carbon-based particles may have a shape which is recessed from the outermost portion of the carbon-based particles into an interior of the carbon-based particles.

In addition, according to the present disclosure, there is provided a lithium secondary battery including: an anode including the above-described anode active material for a lithium secondary battery; and a cathode disposed opposite the anode.

Further, according to the present disclosure, there is provided a method for preparing an anode active material for a lithium secondary battery including: preparing carbon-based particles including pores; and calcining the carbon-based particles and the silicon-containing gas three times at different temperatures to form composite particles including a silicon-containing coating formed on the surface of the carbon-based particles, wherein the ratio of oxygen atoms to silicon atoms (O/Si atomic ratio), measured by X-ray photoelectron spectroscopy (XPS) analysis at a depth of 100 nm from the surface toward the center of the composite particles, is 0.13 to 0.6.

In some embodiments, the silicon-containing gas may include silane gas.

In some embodiments, the silicon-containing gas may further include an inert gas.

In some embodiments, the calcination may include a first calcination, a second calcination performed at a higher temperature than the first calcination, and a third calcination performed at a higher temperature than the second calcination.

In some embodiments, the first calcination, second calcination, and third calcination may be performed sequentially.

In some embodiments, the first calcination may be performed at 400 °C to 450 °C.

In some embodiments, the second calcination may be performed at 500 °C to 550 °C.

According to one embodiment of the present disclosure, battery expansion due to side reactions between the anode active material and the electrolyte may be suppressed, and the cycle life characteristics of the secondary battery may be improved.

According to one embodiment of the present disclosure, the chemical stability of the anode active material may be improved, and the cycle life characteristics of the secondary battery may be enhanced.

The anode active material for a lithium secondary battery of the present disclosure and the lithium secondary battery including the same may be widely applied in green technology fields, such as electric vehicles, battery charging stations, as well as solar power generation, wind power generation, and the like, which use the batteries. The anode active material for a lithium secondary battery of the present disclosure and the lithium secondary battery including the same may be used in eco-friendly electric vehicles, hybrid vehicles, and the like, which are aimed at mitigating climate change by reducing air pollution and greenhouse gas emissions.

### [BRIEF DESCRIPTION OF THE DRAWINGS]

The above and other objects, features and advantages of the present disclosure will be more clearly understood from the following detailed description taken in conjunction with the accompanying drawings, in which:
FIG. 1 is a schematic cross-sectional view illustrating a composite particle according to exemplary embodiments; and
FIGS. 2 and 3 are schematic plan and cross-sectional views, respectively, illustrating a lithium secondary battery according to exemplary embodiments.

### [DETAILED DESCRIPTION OF THE INVENTION]

Embodiments of the present disclosure provide an anode active material for a lithium secondary battery (hereinafter, abbreviated as "anode active material") including composite particles. Furthermore, a lithium secondary battery (hereinafter, abbreviated as "secondary battery") including the anode active material is provided.

Hereinafter, the embodiments of the present disclosure will be described in detail.

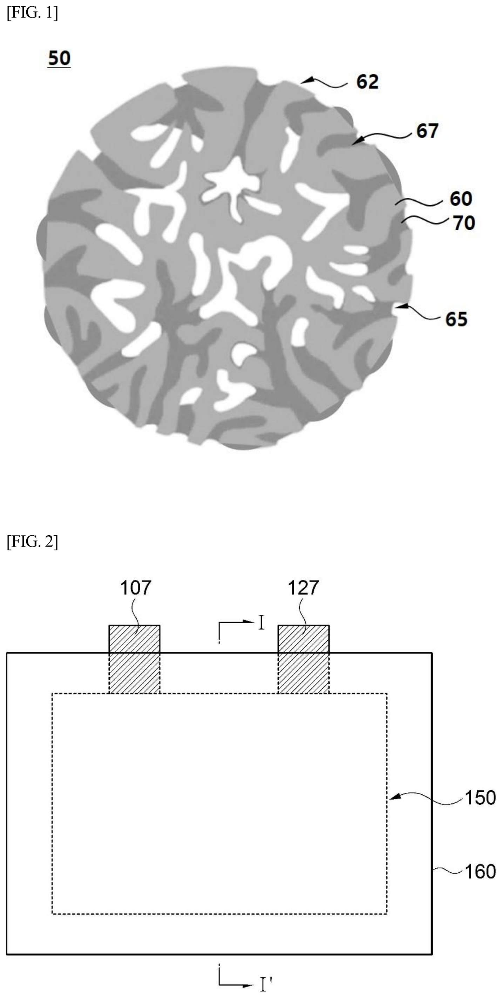

FIG. 1 is a schematic cross-sectional view illustrating a composite particle according to exemplary embodiments.

FIG. 1 schematically illustrates the shape of the composite particle for the convenience of description, but the structure and shape of the composite particle of the present disclosure are not limited to those shown in FIG. 1. For example, the cross-section of the carbon-based particle may vary randomly from a circle. In addition, a silicon-containing coating may be partially formed on the pores and the surface of the carbon-based particles, and may be formed as a plurality of discontinuous islands or patterns.

Referring to FIG. 1, a composite particle 50 includes carbon-based particles 60 and a silicon (Si)-containing coating 70. For example, the anode active material may include a plurality of composite particles 50.

In exemplary embodiments of the present disclosure, the carbon-based particles 60 may include pores 65. For example, the carbon-based particles 60 may be a porous particle including a plurality of pores.

In some embodiments, the carbon-based particles 60 may include activated carbon, carbon nanotubes, carbon nanowires, graphene, carbon fibers, carbon black, graphite, porous carbon, pyrolyzed cryogel, pyrolyzed xerogel, pyrolyzed aerogel and the like. These may be used alone or in combination of two or more thereof.

In some embodiments, the above-described carbon-based particle 60 may include an amorphous structure or a crystalline structure.

According to an embodiment, the carbon-based particle 60 may include an amorphous structure. In this case, the durability of the anode active material may be increased, and crack generation may be suppressed during charging and discharging or when subjected to external impacts. Accordingly, the cycle life characteristics of the secondary battery may be improved.

A silicon-containing coating 70 may be formed on the surface of the carbon-based particles 60 including the pores 65. For example, the volume expansion of silicon included in the silicon-containing coating 70 may be alleviated by the pores 65. Accordingly, cracks due to a difference in the volume expansion rates between carbon (e.g., about 150 vol% ("vol%") or less) and silicon (e.g., about 400 vol% or more) during charging and discharging of the battery may be prevented while employing relatively high capacity characteristics of silicon. Accordingly, battery expansion due to side reactions between the anode active material and the electrolyte may be suppressed, and the cycle life characteristics of the secondary battery may be improved.

The pores 65 of the carbon-based particle 60 may have a shape which is recessed from the outermost portion of the carbon-based particle 60 into the interior of the carbon-based particle 60. For example, the pores 65 may include open pores which are exposed to an exterior of the carbon-based particle 60.

The term(s) "surface of the carbon-based particle" and/or "surface of the carbon-based particle 60" as used herein may refer to an outer surface 62 of carbon-based particle 60, an inner surface 67 of the pores 65, or the outer surface 62 of carbon-based particle 60 and the inner surface 67 of the pores 65.

In some embodiments, the pores 65 of the carbon-based particle 60 may have a size of 0.1 nm to 10 nm, 0.5 nm to 8 nm, or 1 nm to 5 nm. Within the above range, excessive deposition of silicon may be prevented, such that crack generation in the anode active material during charging and discharging of the secondary battery may be further suppressed.

The size of the pores 65 may refer to the diameter of the entrances of the pores 65 formed on the surface of the carbon-based particle 60.

For example, the silicon-containing coating 70 may be formed on at least a portion of the outer surface 62 of the carbon-based particle 60.

For example, the silicon-containing coating 70 may be formed on at least a portion of the inner surface 67 of the pores 65 of the carbon-based particle 60.

For example, the silicon-containing coating 70 may be formed on at least a portion of the outer surface 62 of the carbon-based particle 60 and at least a portion of the inner surface 67 of the pores 65.

In some embodiments, the silicon-containing coating 70 may include amorphous silicon. Accordingly, the stability of the composite particle may be improved and the cycle life characteristics of the secondary battery may be enhanced.

In one embodiment, the silicon-containing coating 70 may not include crystalline silicon. Accordingly, the stability of the composite particle may be further improved and the cycle life characteristics of the secondary battery may be further enhanced.

In some embodiments, the silicon-containing coating 70 may include silicon and may further optionally include SiOₓ (0<x<4).

In one embodiment, the composite particle 50 may not include silicon carbide (SiC). In this case, the capacity and cycle life characteristics of the anode active material may be improved.

In embodiments of the present disclosure, the ratio of oxygen atoms to silicon atoms (O/Si atomic ratio), measured by X-ray photoelectron spectroscopy (XPS) analysis at a depth of 100 nm from the surface toward the center of the composite particles 50, may be 0.13 to 0.6.

In some embodiments, the ratio of oxygen atoms to silicon atoms (O/Si atomic ratio) may be 0.16 to 0.43. Within this range, the chemical stability of the composite particle 50 may be enhanced and the cycle life characteristics may be improved.

If the O/Si atomic ratio is less than 0.13, the chemical stability of the composite particle 50 may be degraded, causing gas generation in the anode slurry and deterioration of the cycle life characteristics of the secondary battery.

If the O/Si atomic ratio exceeds 0.6, the exposed area of silicon may increase, resulting in an increased volume expansion ratio of the anode and deterioration of the cycle life characteristics.

For example, the O/Si atomic ratio may indicate the degree of silicon oxidation in the composite particle 50.

For example, the O/Si atomic ratio at a depth of greater than or equal to 0 nm and less than 100 nm from the surface toward the center of the composite particle 50 may vary significantly depending on the external environment, thereby reducing the reliability of determining the degree of silicon oxidation in the composite particle 50.

According to embodiments of the present disclosure, the O/Si atomic ratio may be measured at a depth of 100 nm from the surface toward the center of the composite particle 50. Accordingly, the reliability of evaluating the degree of silicon oxidation in in the composite particle 50 may be improved.

For example, the O/Si atomic ratio may be measured based on multiple peaks obtained by deconvolving the XPS Si2p spectrum of the composite particles 50.

The deconvolution may refer to an analysis method in which the Si2p spectrum obtained through XPS analysis is fitted into multiple peaks.

For example, the XPS Si2p spectrum may be obtained by performing depth profiling using sputtering to a depth of 100 nm 100 nm from the surface toward the center of the composite particle 50, and conducting XPS analysis. A baseline may be set using the Shirley method in the range of 96 eV to 110 eV for the XPS Si2p spectrum, and peak fitting, i.e., deconvolution, may be performed, for example, using a Gaussian-Lorentzian mixed function. By deconvolution of the XPS Si2p spectrum, 2p3/2 peaks and 2p 1/2 peaks corresponding to Si⁰, Si¹⁺, Si²⁺, Si³⁺ and Si⁴⁺ may be obtained, respectively (then peaks in total). The relative peak areas of the obtained peaks may represent the relative proportions of Si atoms existing in each oxidation state of Si0, Si⁰, Si¹⁺, Si²⁺, Si³⁺ and Si⁴⁺, and the sum of all peak areas may be a value proportional to the total number of Si atoms, i.e., a 'total number of Si atoms × proportionality constant (C)'. The Si atoms in each oxidation state may bond with 0, 0.5, 1, 1.5, and 2 oxygen atoms, wherein the ratio of Si to O may be 1:0, 1:0.5, 1:1, 1:1.5, and 1:2, respectively. The peak areas corresponding to each oxidation state of Si atoms may be multiplied by the number of such bonds (for example, the number of Si-O bonds) to obtain a value proportional to the total number of oxygen atoms, i.e., the 'total number of Si atoms × proportionality constant (C)'. When the value proportional to the total number of oxygen atoms is divided by that proportional to the total number of Si atoms, the same proportional constant cancels out, thereby allowing the O/Si atomic ratio to be accurately determined.

In some embodiments, the composite particle 50 may further include a carbon coating (not shown) formed on the silicon-containing coating 70. Accordingly, contact between the silicon and water in the anode active material may be prevented. As a result, the decrease in discharge capacity and capacity efficiency of the secondary battery after the anode active material is prepared and before the anode is formed may be suppressed.

In some embodiments, the carbon coating may be formed even on a portion of the surface of the carbon-based particle 60 where the silicon-containing coating 70 is not formed. For example, the carbon coating may entirely cover the carbon-based particles 60 and the silicon-containing coating 70. Accordingly, mechanical stability and chemical stability of the anode active material may be improved.

In one embodiment, the carbon coating may include at least one of carbon and a conductive polymer. For example, the carbon may include amorphous carbon. For example, the conductive polymer may include polyacetylene, polyaniline, polypyrrole, polythiophene, and the like.

Hereinafter, a method for preparing the above-described anode active material for a lithium secondary battery according to exemplary embodiments will be described.

In embodiments of the present disclosure, carbon-based particles 60 including pores 65 may be prepared.

In some embodiments, the carbon-based particles 60 may be formed by mixing, heat-treating, and washing preliminary carbon-based particles and an additive.

In one embodiment, the preliminary carbon-based particles may include at least one selected from the group consisting of glucose, sucrose, cellulose, petroleum-based pitch, coal-based pitch, biomass, and resol oligomer.

In some embodiments, the additive may be provided as a chemical etchant or a hard template.

In one embodiment, the chemical etchant may include basic and/or acidic agents such as potassium hydroxide (KOH), potassium acetate, potassium carbonate (K₂CO₃), sodium hydroxide (NaOH), sodium carbonate (Na₂CO₃), ammonium hydroxide (NH₄OH), or sulfuric acid (H₂SO₄). These may be used alone or in combination of two or more thereof. For example, the reaction between the preliminary carbon-based particles and the additive may be performed by a chemical activation method.

In one embodiment, the hard template may include silica, polystyrene or the like. These may be used alone or in combination of two or more thereof. The hard template may be provided as a pore-forming additive, for example. For instance, the size of the pores 65 may be controlled depending on the particle size of the hard template.

In one embodiment, the heat treatment may be performed at a temperature of 600 °C to 900 °C. Within this range, the size and/or volume of the pores 65 may be appropriately controlled.

In one embodiment, the washing may be performed by adding an acidic solution or a basic solution to the mixture. For example, the acidic solution may include a hydrochloric acid (HCl) solution, or a sulfuric acid (H₂SO₄) solution. For example, the basic solution may include a NaOH solution or the like.

In exemplary embodiments, the carbon-based particles 60 may be calcined together with a silicon-containing gas three times at different temperatures to form the composite particles 50 including the silicon-containing coating 70 formed on the surface of the carbon-based particles 60.

In some embodiments, the silicon-containing gas may include silane gas and an inert gas. For example, the inert gas may include nitrogen (N₂) gas, argon (Ar) gas or the like.

In some embodiments, the calcination may include a first calcination, a second calcination performed at a higher temperature than the first calcination, and a third calcination performed at a higher temperature than the second calcination.

For example, the first calcination, the second calcination, and the third calcination may be performed sequentially.

In some embodiments, the first calcination may be performed at a temperature between 400 °C and 450 °C. Within this range, while the deposition degree of the silicon-containing coating may be improved, and the O/Si atomic ratio may be controlled within an appropriate range.

In some embodiments, the second calcination may be performed at a temperature between 500 °C and 550 °C. Within this range, the deposition degree of the silicon-containing coating may be improved, and the O/Si atomic ratio may be controlled within an appropriate range.

In some embodiments, the third calcination may be performed at 600 °C to 650 °C. Within this range, the deposition degree of the silicon-containing coating may be improved, and the O/Si atomic ratio may be controlled within an appropriate range.

The O/Si atomic ratio of the composite particles 50 formed by the above-described method may be 0.13 to 0.6.

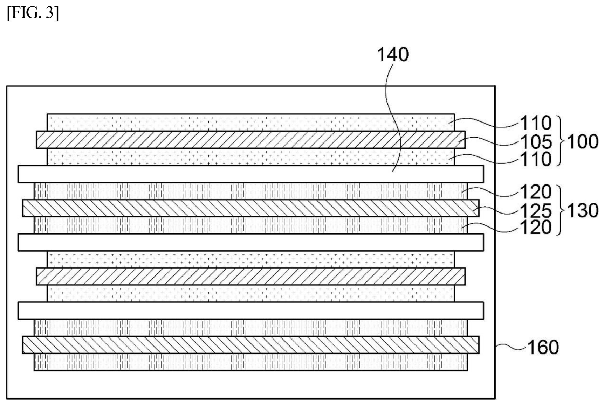

FIGS. 2 and 3 are schematic plan and cross-sectional views illustrating a lithium secondary battery according to exemplary embodiments, respectively. For example, FIG. 3 is a cross-sectional view taken along the line I-I' of FIG. 2 in the thickness direction.

The lithium secondary battery may include an anode 130 including the above-described anode active material and a cathode 100 disposed opposite the anode 130.

The cathode 100 may include a cathode current collector 105, and a cathode active material layer 110 formed on at least one surface of the cathode current collector 105.

The cathode current collector 105 may include stainless steel, nickel, aluminum, titanium or an alloy thereof. The cathode current collector 105 may also include aluminum or stainless steel having a surface treated with carbon, nickel, titanium or silver. For example, the cathode current collector 105 may have a thickness of 10 to 50 µm.

The cathode active material layer 110 may include a cathode active material. The cathode active material may include a compound capable of reversibly intercalating and deintercalating lithium ions.

According to exemplary embodiments, the cathode active material may include a lithium-nickel metal oxide. The lithium-nickel metal oxide may further include at least one of cobalt (Co), manganese (Mn) and aluminum (Al).

In some embodiments, the cathode active material or the lithium-nickel metal oxide may include a layered structure or a crystal structure represented by Formula 1 below.

[Formula 1] LiₓNiₐM_{b}O_{2+z}

In Formula 1, x, a, b and z may satisfy 0.9≤x≤1.2, 0.6≤a≤0.99, 0.01≤b≤0.4, and -0.5≤z≤0.1. As described above, M may include Co, Mn and/or Al.

The chemical structure represented by Formula 1 indicates a bonding relationship among elements included in the layered structure or the crystal structure of the cathode active material, and does not exclude the presence of additional elements. For example, M includes Co and/or Mn, and Co and/or Mn may be provided as main active elements of the cathode active material together with Ni. Here, it should be understood that Formula 1 is provided to express the bonding relationship between the main active elements, and is a formula encompassing the introduction and substitution of additional elements.

In one embodiment, the cathode active material may further include auxiliary elements which are added to the main active elements, in order to enhance chemical stability thereof or the layered structure/crystal structure. The auxiliary element may be incorporated into the layered structure/crystal structure together with the main active elements to form bonds, and it should be understood that this case is also included within the chemical structure range represented by Formula 1.

The auxiliary element may include, for example, at least one ofNa, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may serve as an auxiliary active element that contributes to the capacity/output activity of the cathode active material together with Co or Mn, such as Al.

For example, the cathode active material or the lithium-nickel metal oxide may include a layered structure or a crystal structure represented by Formula 1-1 below.

[Formula 1-1] LiₓNiₐM1_{b1}M2_{b2}O_{2+z}

In Formula 1-1, M1 may include Co, Mn and/or Al. M2 may include the above-described auxiliary elements. In Formula 1-1, x, a, b1, b2 and z may satisfy 0.9≤x≤1.2, 0.6≤a≤0.99, 0.01≤b1+b2≤0.4, and -0.5≤z≤0.1.

The cathode active material may further include a coating element or a doping element. For example, elements which are substantially the same as or similar to the above-described auxiliary elements may be used as the coating element or the doping element. For example, the above-described elements may be used alone or in combination of two or more thereof as the coating element or the doping element.

The coating element or the doping element may be present on the surface of the lithium-nickel metal oxide particles, or may penetrate through the surface of the lithium-nickel metal composite oxide particles to be incorporated into the bonding structure represented by Formula 1 or Formula 1-1 above.

The cathode active material may include a nickel-cobalt-manganese (NCM)-based lithium oxide. In this case, an NCM-based lithium oxide with an increased content of nickel may be used.

Nickel may serve as a transition metal associated with the output and capacity of the lithium secondary battery. Therefore, as described above, by employing a high-nickel-content (high-Ni) composition in the cathode active material, a high-capacity cathode and a high-capacity lithium secondary battery may be provided.

However, as the Ni content increases, the long-term storage stability and cycle life stability of the cathode or the secondary battery may be relatively reduced, and side reactions with the electrolyte may also increase. Nevertheless, according to exemplary embodiments, by including Co while maintaining electrical conductivity, and Mn to improve cycle stability and capacity retention, both properties can be enhanced.

The content of Ni (e.g., the molar fraction of nickel based on the total molar amount of nickel, cobalt and manganese) in the NCM-based lithium oxide may be 0.5 or more, 0.6 or more, 0.7 or more, or 0.8 or more. In some embodiments, the content of Ni may be 0.8 to 0.95, 0.82 to 0.95, 0.83 to 0.95, 0.84 to 0.95, 0.85 to 0.95, or 0.88 to 0.95.

In some embodiments, the cathode active material may include a lithium metal oxide-based active material, a lithium manganese oxide-based active material, a lithium nickel oxide-based active material, or a lithium iron phosphate (LFP) active material (e.g., LiFePO₄).

In some embodiments, the cathode active material may include, for example, an Li-rich layered oxide (LLO)/over-lithiated oxide (OLO)-based active material, an Mn-rich-based active material, or a Co-less active material, each having a chemical structure or a crystal structure represented by Formula 2. These may be used alone or in combination of two or more thereof.

[Formula 2] p[Li₂MnO₃]·(1-p)[Li_{q}JO₂]

In Formula 2, p and q may satisfy 0<p<1, and 0.9≤q≤1.2, and J may include at least one element selected from Mn, Ni, Co, Fe, Cr, V, Cu, Zn, Ti, Al, Mg and B.

The cathode active material may be mixed in a solvent to prepare a cathode slurry. The cathode slurry may be applied to at least one surface of the cathode current collector 105, then dried and pressed to prepare the cathode active material layer 110. The coating may include processes such as gravure coating, slot die coating, simultaneous multilayer die coating, imprinting, doctor blade coating, dip coating, bar coating or casting, etc. The cathode active material layer 110 may further include a binder, and optionally may further include a conductive material, a thickener or the like.

As the solvent, N-methyl-2-pyrrolidone (NMP), dimethylformamide, dimethylacetamide, N,N-dimethylaminopropylamine, ethylene oxide, tetrahydrofuran, and the like may be used.

The binder may include polyvinylidene fluoride (PVDF), poly(vinylidene fluoride-co-hexafluoropropylene), polyacrylonitrile, polymethylmethacrylate, acrylonitrile butadiene rubber (NBR), polybutadiene rubber (BR), styrene-butadiene rubber (SBR) and the like. These may be used alone or in combination of two or more thereof.

In one embodiment, a PVDF-based binder may be used as the cathode binder. In this case, the amount of binder for forming the cathode active material layer 110 may be decreased and the amount of the cathode active material may be relatively increased. Accordingly, the output characteristics and capacity characteristics of the secondary battery may be improved.

The conductive material may be added to the cathode active material layer 110 in order to enhance the conductivity thereof and/or the mobility of lithium ions or electrons. For example, the conductive material may include carbon-based conductive materials such as graphite, carbon black, acetylene black, Ketjen black, graphene, carbon nanotubes (CNTs), vapor-grown carbon fibers (VGCF), or carbon fibers; and/or metal-based conductive materials such as tin, tin oxide, and titanium oxide; and perovskite materials such as LaSrCoO₃, and LaSrMnO₃. These may be used alone or in combination of two or more thereof.

The cathode slurry may further include a thickener and/or a dispersant. In one embodiment, the cathode slurry may include a thickener such as carboxymethyl cellulose (CMC).

The anode 130 may include an anode current collector 125, and an anode active material layer 120 formed on at least one surface of the anode current collector 125.

For example, the anode current collector 125 may include a copper foil, nickel foil, stainless steel foil, titanium foil, nickel foam, copper foam, or a polymer substrate coated with a conductive metal. These may be used alone or in combination of two or more. For example, the anode current collector 125 may have a thickness of 10 µm to 50 µm.

The anode active material layer 120 may include an anode active material including the above-described composite particles 50. For example, the anode active material may include a plurality of composite particles 50.

In some embodiments, the anode active material may include the composite particles 50 and a graphite-based active material. For example, the graphite-based active material may include artificial graphite and/or natural graphite.

The content of the composite particles 50 may be 1% by weight ("wt%") or more, 3 wt% or more, 5 wt% or more, 10 wt% or more, 15 wt% or more, 20 wt% or more, 25 wt% or more, 30 wt% or more, 35 wt% or more, 40 wt% or more, or 45 wt% or more based on the total weight of the anode active material (e.g., the total weight of the plurality of composite particles 50 and the graphite-based active material).

The content of the composite particles may be 99 wt% or less, 97 wt% or less, 95 wt% or less, 90 wt% or less, 85 wt% or less, 80 wt% or less, 75 wt% or less, 70 wt% or less, 65 wt% or less, 60 wt% or less, 55 wt% or less, or 50 wt% or less based on the total weight of the anode active material.

In one embodiment, the anode active material may be substantially composed of the composite particles 50 and the graphite-based active material.

The anode active material may be mixed in a solvent to prepare an anode slurry. The anode slurry may be coated or deposited onto the anode current collector 125, then dried and pressed to prepare the anode active material layer 120. The coating may include processes such as gravure coating, slot die coating, simultaneous multilayer die coating, imprinting, doctor blade coating, dip coating, bar coating or casting, etc. The anode active material layer 120 may further include a binder, and optionally may further include a conductive material, a thickener or the like.

The solvent included in the anode slurry may include water, purified water, deionized water, distilled water, ethanol, isopropanol, methanol, acetone, n-propanol, t-butanol and the like. These may be used alone or in combination of two or more thereof.

The above-described materials that can be used when preparing the cathode 100 as the binder, conductive material and thickener may also be used for the anode.

In some embodiments, a styrene-butadiene rubber (SBR)-based binder, carboxymethyl cellulose (CMC), polyacrylic acid-based binder, poly(3,4-ethylenedioxythiophene, PEDOT)-based binder, and the like may be used as an anode binder. These may be used alone or in combination of two or more thereof.

In exemplary embodiments, a separator 140 may be interposed between the cathode 100 and the anode 130. The separator 140 may be configured to prevent an electrical short-circuit between the cathode 100 and the anode 130, and to allow the flow of ions. For example, the separator may have a thickness of 10 µm to 20 µm.

For example, the separator 140 may include a porous polymer film or a porous nonwoven fabric.

The porous polymer film may include a polyolefin polymer, such as an ethylene polymer, propylene polymer, ethylene/butene copolymer, ethylene/hexene copolymer, or ethylene/methacrylate copolymer. These may be used alone or in combination of two or more thereof.

The porous nonwoven fabric may include high-melting point glass fibers, polyethylene terephthalate fibers, etc.

The separator 140 may also include a ceramic material. For example, inorganic particles may be coated on the polymer film or dispersed within the polymer film to improve heat resistance.

The separator 140 may have a single-layer or multi-layer structure including the above-described polymer film and/or nonwoven fabric.

According to exemplary embodiments, an electrode cell is defined by the cathode 100, the anode 130, and the separator 140, and a plurality of electrode cells may be stacked to form an electrode assembly 150, for example, in the form of a jelly roll. For example, the electrode assembly 150 may be formed by winding, stacking, z-folding, or stack-folding the separator 140.

The electrode assembly 150 may be accommodated within a case 160 together with an electrolyte to define a lithium secondary battery. According to exemplary embodiments, a non-aqueous electrolyte may be used as the electrolyte.

The non-aqueous electrolyte contains a lithium salt as an electrolyte and an organic solvent, and the lithium salt may expressed as, for example, Li⁺X⁻, and examples of the anion (X⁻) of the lithium salt include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

Examples of the organic solvents include propylene carbonate (PC), ethylene carbonate (EC), butylene carbonate, diethyl carbonate (DEC), dimethyl carbonate (DMC), ethyl methyl carbonate (EMC), methylpropyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF), 2-methyltetrahydrofuran, ethyl alcohol, isopropyl alcohol, dimethyl sulfur oxide, acetonitrile, diethoxyethane, sulfolane, γ-butyrolactone, and propylene sulfite may be used. These may be used alone or in combination of two or more thereof.

The non-aqueous electrolyte may further include an additive. The additive may include, for example, a cyclic carbonate compound, a fluorine-substituted carbonate compound, a sultone compound, a cyclic sulfate compound, a cyclic sulfite compound, a phosphate compound, a borate compound, etc. These may be used alone or in combination of two or more thereof.

The cyclic carbonate compound may include vinylene carbonate (VC), vinyl ethylene carbonate (VEC), etc.

The fluorine-substituted carbonate compound may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis(oxalato) phosphate, lithium difluorophosphate, etc.

The borate compound may include lithium bis(oxalate) borate, etc.

In some embodiments, a solid electrolyte may be used instead of the above-described non-aqueous electrolyte. In this case, the lithium secondary battery may be manufactured in the form of an all-solid-state battery. In addition, a solid electrolyte layer may be arranged between the cathode 100 and the anode 130 instead of the above-described separator 140.

The solid electrolyte may include a sulfide-based electrolyte. As a non-limiting example, the sulfide-based electrolyte may include Li₂S-P₂S₅, Li₂S-P₂S₅-LiCl, Li₂S-P₂S₅-LiBr, Li₂S-P₂S₅-LiCl-LiBr, Li₂S-P₂S₅-Li2O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m, n are positive numbers, Z is Ge, Zn or Ga), Li₂S-GeS₂, Li₂S-SiS₂-Li₃PO₄, Li₂S-SiS₂-LiₚMO_{q}, (p, q is a positive number, M may include P, Si, Ge, B, Al, Ga, or In), Li₇-xPS₆-xClₓ (0≤x≤2), Li₇-xPS₆-xBrₓ (0≤x≤2), Li₇-xPS₆-xIₓ (0≤x≤2), etc. These may be used alone or in combination of two or more thereof.

In one embodiment, the solid electrolyte may include an oxide-based amorphous solid electrolyte, such as Li₂O-B₂O₃-P₂O₅, Li₂O-SiO₂, Li₂O-B₂O₃, Li₂O-B₂O₃-ZnO, etc.

As illustrated in FIG. 3, electrode tabs (cathode tabs and anode tabs) may protrude from the cathode current collector 105 and the anode current collector 125, respectively, which belong to respective electrode cells, and may extend to one side of the case 160. The electrode tabs may be fused or welded together with the one side of the case 160 and connected to electrode leads (a cathode lead 107 and an anode lead 127) that extend or are exposed to the outside of the case 160.

The lithium secondary battery may be manufactured, for example, in a cylindrical, prismatic, pouch, or coin type using a can.

According to a first aspect of the present disclosure, an anode active material for a lithium secondary battery comprises: carbon-based particles(60) including pores(65); and composite particles(50) including a silicon-containing coating(70) disposed on the surface of the carbon-based particles(60), wherein the ratio of oxygen atoms to silicon atoms (O/Si atomic ratio), measured by X-ray photoelectron spectroscopy (XPS) analysis at a depth of 100 nm from the surface toward the center of the composite particles(50), is 0.13 to 0.6.

According to a second aspect of the present disclosure, the O/Si atomic ratio may be 0.16 to 0.43.

According to a third aspect of the present disclosure, the pores(65) of the carbon-based particles(60) may have a size of 0.1 nm to 10 nm.

According to a fourth aspect of the present disclosure, the pores(65) of the carbon-based particles(60) may have a size of 1 nm to 5 nm.

According to a fifth aspect of the present disclosure, the composite particles(50) may further include a carbon coating disposed on the silicon-containing coating(70) .

According to a sixth aspect of the present disclosure, the carbon coating may include at least one selected from the group consisting of amorphous carbon and a conductive polymer.

According to a seventh aspect of the present disclosure, the pores(65) of the carbon-based particles(60) may have a shape which is recessed from the outermost portion of the carbon-based particles(60) into an interior of the carbon-based particles(60).

According to an eighth aspect of the present disclosure, a lithium secondary battery comprises: an anode(130) including the anode active material for a lithium secondary battery according to any one of the first to seventh aspects; and a cathode(100) disposed opposite the anode(130).

According to a ninth aspect of the present disclosure, a method for preparing an anode active material for a lithium secondary battery comprises: preparing carbon-based particles(60) including pores(65); and calcining the carbon-based particles(60) and the silicon-containing gas three times at different temperatures to form composite particles(50) including a silicon-containing coating(70) formed on the surface of the carbon-based particles(60), wherein the ratio of oxygen atoms to silicon atoms (O/Si atomic ratio), measured by X-ray photoelectron spectroscopy (XPS) analysis at a depth of 100 nm from the surface toward the center of the composite particles(50), is 0.13 to 0.6.

According to a tenth aspect of the present disclosure, the silicon-containing gas may include silane gas.

According to an eleventh aspect of the present disclosure, the calcination may include a first calcination, a second calcination performed at a higher temperature than the first calcination, and a third calcination performed at a higher temperature than the second calcination.

According to a twelfth aspect of the present disclosure, the first calcination, second calcination, and third calcination may be performed sequentially.

According to a thirteenth aspect of the present disclosure, the first calcination may be performed at 400 °C to 450 °C.

According to a fourteenth aspect of the present disclosure, the second calcination may be performed at 500 °C to 550 °C.

According to a fifteenth aspect of the present disclosure, the third calcination may be performed at 600 °C to 650 °C.

Hereinafter, the embodiments of the present disclosure will be further described with reference to specific experimental examples.

### Example 1

### (1) Preparation of composite particles

### 1) Preparation of carbon-based particles

Pitch and potassium acetate were dry-mixed at a weight ratio of 5:5 and heat-treated at 800 °C for 2 hours. The heat-treated mixture was washed with an excess amount of 0.5 M HCl aqueous solution to prepare carbon-based particles containing pores. The carbon-based particles were prepared so that the specific pore volume in the carbon-based particles was 0.6 cm³/g.

### 2) Formation of silicon-containing coating

A silicon-containing gas including silane gas and nitrogen gas was injected into a CVD coater at a flow rate of 50 mL/min to 100 mL/min. The content of the silane gas was 70 vol% based on the total volume of the silicon-containing gas.

The CVD coater was heated to 400 °C at a heating rate of 5 °C/min to 20 °C/min, and a first calcination was performed for 30 minutes while maintaining the temperature at 400 °C.

After the first calcination, the CVD coater was heated to 550 °C at a heating rate of 5 °C/min to 20 °C/min, and a second calcination was performed for 3 hours while maintaining the temperature at 550 °C.

After the second calcination, the CVD coater was heated to 600 °C at a heating rate of 5 °C/min to 20 °C/min, and a third calcination was performed for 30 minutes while maintaining the temperature at 600 °C to prepare composite particles including a silicon-containing coating.

The deposition time was controlled as described above so that the target silicon content was 50 wt% based on the total weight of the composite particles.

### (2) Fabrication of anode

An anode slurry was obtained by mixing 95.5 wt% of the anode active material, which included 15 wt% of the prepared composite particles and 80.5 wt% of artificial graphite, 1 wt% of carbon nanotubes (CNTs) as a conductive material, 2 wt% of styrene-butadiene rubber (SBR) as a binder, and 1.5 wt% of carboxymethyl cellulose (CMC) as a thickener.

The anode slurry was coated onto a copper substrate, and then dried and roll-pressed to fabricate an anode.

### (3) Manufacture of lithium secondary battery

A lithium secondary battery was manufactured including the anode and using lithium metal as a counter electrode (cathode).

Specifically, a separator (polyethylene, thickness 20 µm) was interposed between the prepared anode and lithium metal (thickness 1 mm) to form a lithium coin half-cell in accordance with the CR2016 standard (diameter 20 mm, thickness 1.6 mm).

The assembly of the lithium metal/separator/anode was placed in a coin cell plate. After injecting the electrolyte, a cap was placed on it and the cell was clamped. A solution, prepared by dissolving a 1 M LiPF₆ in a mixed solvent of EC/EMC (3:7; volume ratio), and further adding 2.0 vol% of fluoroethylene carbonate (FEC) based on the total volume of the electrolyte, was used as the electrolyte. After clamping, the cells were allowed to stand for impregnation for 3 to 24 hours, followed by 3 cycles of charge and discharge at 0.1C (charging conditions: CC/CV, 0.1C, 0.01 V, 0.01C cut-off; discharging conditions: CC, 0.1C, 1.5 V cut-off).

### Examples 2 to 10, and Comparative Examples 1 and 2

Composite particles, anodes, and lithium secondary batteries were manufactured in the same manner as in Example 1, except that the first, second, and third calcination temperatures were changed as shown in Table 1.

### Example 11

Composite particles, an anode, and a lithium secondary battery were manufactured in the same manner as in Example 1, except that an equal amount of a silica dispersion having a median particle diameter of 5 nm was introduced instead of potassium acetate, and washing was performed with a 0.5 M NaOH aqueous solution instead of the HCl aqueous solution.

### Example 12

Composite particles, an anode, and a lithium secondary battery were manufactured in the same manner as in Example 1, except that an equal amount of a silica dispersion having a median particle diameter of 10 nm was introduced instead of potassium acetate, and washing was performed with a 0.5 M NaOH aqueous solution instead of the HCl aqueous solution.

### Example 13

Composite particles, an anode, and a lithium secondary battery were manufactured in the same manner as in Example 1, except that an equal amount of a dispersion of silica having a median particle diameter of 12 nm was introduced instead of potassium acetate, and washing was performed with a 0.5 M NaOH aqueous solution instead of the HCl aqueous solution.

### Comparative Example 3

Composite particles, an anode, and a lithium secondary battery were manufactured in the same manner as in Example 1, except that the first, second, and third calcinations were replaced a single calcination, in which the CVD coater was heated to 450 °C at a heating rate of 5 °C/min to 20 °C/min and maintained at 450 °C for 4 hours.

### Comparative Examples 4 to 6

Composite particles, an anode, and a lithium secondary battery were manufactured in the same manner as in Comparative Example 3, except that the calcination temperature was changed as shown in Table 1.

### Experimental Example

### (1) XPS Analysis - Measurement of O/Si atomic ratio

Composite particles prepared according to the above-described examples and comparative examples were attached to carbon tape to prepare samples, and then placed in an XPS apparatus (ESCALAB 250Xi, Thermo Scientific).

XPS analysis was performed under the following XPS analysis conditions to obtain XPS Si2p spectra (hereinafter referred to as surface spectra) for the surface of the composite particles.

For the same samples, the composite particles were etched under the following etching conditions, and XPS analysis was performed again under the same XPS analysis conditions to obtain XPS Si2p spectra (hereinafter referred to as 100 nm spectra) at a depth of 100 nm from the surface toward the center of the composite particles.

### [XPS analysis conditions]

i) X-ray type: Al Kα monochromatic source
ii) Source energy (hv) : 1486.68 eV
iii) Beam size: 500 µm
iv) Analyzer: CAE (constant analyzer energy) mode
v) Number of scans: 50
vi) Pass energy: 20 eV
vii) Dwell time: 100 ms

### [Etching conditions]

i) Type: Argon ion gun
ii) Ion energy: 4000 eV
iii) Raster size: 3 mm
iv) Etch cycle time: 280 s

In the etching, the etching depth was calculated based on the Ta₂O₅ data, and the etching rate was 0.3538 nm/s.

For the acquired XPS Si2p spectra, a baseline was established using the Shirley method in the range of 96 eV to 110 eV. Subsequently, peak fitting (i.e., deconvolution) was performed using a Gaussian-Lorentzian mixed function, thereby separating the 2p3/2 and 2p1/2 peaks corresponding to Si⁰, Si¹⁺, Si²⁺, Si³⁺ and Si⁴⁺, respectively.

For the surface spectrum, the areas of all fitted Si2p peaks were summed to obtain a value proportional to the total number of Si atoms, i.e., the "total number of Si atoms × proportionality constant (C)." Since each Si atom in a given oxidation state may bond with 0, 0.5, 1, 1.5, or 2 oxygen atoms, the peak area corresponding to each oxidation state was multiplied by the respective number of bonds (the number of Si-O bonds) to obtain a value proportional to the total number of oxygen atoms, i.e., the "total number of O atoms × proportionality constant (C)."

The O/Si atomic ratio (surface) was then calculated by dividing the value proportional to the total number of oxygen atoms by that proportional to the total number of Si atoms (where the same proportionality constant cancels out).

For the 100 nm spectrum, the values proportional to the total numbers of Si and O atoms were calculated in the same manner described above, and the O/Si atomic ratio (100 nm) was determined by dividing the value proportional to the total number of O atoms by that proportional to the total number of Si atoms (the same proportionality constant cancels out).

### (2) Measurement of pore size of carbon-based particles

The pore sizes of the carbon-based particles manufactured according to the examples and comparative examples described above were measured using a surface area analyzer (ASAP-2420, Micromeritics).

Specifically, a pore size distribution curve was derived from the nitrogen gas adsorption-desorption isotherm of the samples obtained from the examples and comparative examples, using the Barrett-Joyner-Halenda (BJH) method. The maximum peak position in the pore size distribution curve was measured and taken as the pore size of the carbon-based particles.

### (3) Battery volumetric expansion rate

Three identical lithium coin half-cells were fabricated and charged at 0.1C to 0.01 V. The anode thickness before and after charging was measured using a micrometer, and the average value was calculated from the three measurements. This average value was evaluated as the volumetric expansion ratio of the battery.

### (4) Evaluation of capacity retention (300 Cycles)

Charge and discharge cycle tests were performed on the lithium secondary batteries according to the examples and comparative examples at room temperature (25 °C) under the following conditions. Charging was performed in CC-CV mode at a current of 0.5C to 0.01 V, followed by a cut-off at 0.01 C. Discharging was performed in CC mode at a current of 0.1C to 3.0 V. This charge and discharge process was repeated 300 times. The capacity retention was evaluated by dividing the discharge capacity at the 300th-cycle by the discharge capacity at the first-cycle and multiplying the result by 100.

The measurement and evaluation results are shown in Tables 1 and 2.

In Table 2, a "-" indicates that no significant XPS analysis results were detected.

**[TABLE 1]**

| | Calcination temperature (°C) | | | Pore size (nm) |
|---|---|---|---|---|
| | First calcination | Second calcination | Third calcination | |
| Example 1 | 400 | 550 | 600 | 1 |
| Example 2 | 450 | 550 | 600 | 1 |
| Example 3 | 400 | 550 | 650 | 1 |
| Example 4 | 500 | 550 | 600 | 1 |
| Example 5 | 350 | 550 | 600 | 1 |
| Example 6 | 400 | 500 | 600 | 1 |
| Example 7 | 400 | 450 | 600 | 1 |
| Example 8 | 400 | 600 | 650 | 1 |
| Example 9 | 400 | 500 | 550 | 1 |
| Example 10 | 400 | 550 | 680 | 1 |
| Example 11 | 400 | 550 | 600 | 5 |
| Example 12 | 400 | 550 | 600 | 10 |
| Example 13 | 400 | 550 | 600 | 11 |
| Comparing Example 1 | 400 | 550 | 550 | 1 |
| Comparing Example 2 | 400 | 550 | 700 | 1 |
| Comparing Example 3 | 450 | | | 1 |
| Comparing Example 4 | 550 | | | 1 |
| Comparing Example 5 | 600 | | | 1 |
| Comparing Example 6 | 700 | | | 1 |

**[TABLE 2]**

| | O/Si atomic ratio (surface) | O/Si atomic ratio (100 nm) | Volume expansion ratio (%) | Capacity retention (%, 300 cycles) |
|---|---|---|---|---|
| Example 1 | 0.89 | 0.43 | 55 | 93 |
| Example 2 | 0.91 | 0.28 | 49 | 92 |
| Example 3 | 0.38 | 0.16 | 51 | 94 |
| Example 4 | 1.41 | 0.52 | 50 | 89 |
| Example 5 | 1.35 | 0.48 | 56 | 87 |
| Example 6 | 0.68 | 0.30 | 50 | 91 |
| Example 7 | 1.57 | 0.59 | 55 | 87 |
| Example 8 | 0.85 | 0.49 | 54 | 88 |
| Example 9 | 1.44 | 0.53 | 56 | 88 |
| Example 10 | 1.16 | 0.56 | 56 | 87 |
| Example 11 | 0.29 | 0.13 | 60 | 92 |
| Example 12 | 0.71 | 0.55 | 50 | 91 |
| Example 13 | 0.80 | 0.60 | 51 | 88 |
| Comparing Example 1 | - | 0.64 | 64 | 82 |
| Comparing Example 2 | 0.44 | 0.09 | 68 | 83 |
| Comparing Example 3 | - | 0.73 | 87 | 69 |
| Comparing Example 4 | 1.43 | 0.61 | 71 | 74 |
| Comparing Example 5 | 0.94 | 0.12 | 77 | 67 |
| Comparing Example 6 | - | 0.06 | 79 | 58 |

Referring to Tables 1 and 2, in the examples where the O/Si atomic ratio of the composite particles was 0.13 to 0.6 at a depth of 100 nm from the surface toward the center of the composite particles, the volume expansion ratio decreased, and the capacity retention improved compared to the comparative examples.

In Examples 4 and 5, where the first calcination temperature was outside the range of 400 °C to 450 °C, the capacity retention was relatively lower than in the other examples.

In Examples 7 and 8, where the second calcination temperature was outside the range of 500 °C to 550 °C, the capacity retention was relatively lower than in the other examples.

In Examples 9 and 10, where the third calcination temperature was outside the range of 600 °C to 650 °C, the volume expansion ratio increased and the capacity retention decreased compared to the other examples.

In Example 13, where the carbon-based particles had a pore size exceeding 10 nm, the capacity retention was relatively lower than in the other examples.

The O/Si atomic ratio (100 nm) exhibited less variability due to various external factors than the O/Si atomic ratio (surface), thereby ensuring sufficient reliability as an indicator for evaluating the degree of silicon oxidation in the composite particles.

## Claims

1. An anode active material for a lithium secondary battery comprising:
carbon-based particles(60) including pores(65); and
composite particles(50) including a silicon-containing coating(70) disposed on the surface of the carbon-based particles(60),
wherein the ratio of oxygen atoms to silicon atoms (O/Si atomic ratio), measured by X-ray photoelectron spectroscopy (XPS) analysis at a depth of 100 nm from the surface toward the center of the composite particles(50), is 0.13 to 0.6.

2. The anode active material for a lithium secondary battery according to claim 1, wherein the O/Si atomic ratio is 0.16 to 0.43.

3. The anode active material for a lithium secondary battery according to claims 1 or 2, wherein the pores(65) of the carbon-based particles(60) have a size of 0.1 nm to 10 nm.

4. The anode active material for a lithium secondary battery according to claim 3, wherein the pores(65) of the carbon-based particles(60) have a size of 1 nm to 5 nm.

5. The anode active material for a lithium secondary battery according to any one of claims 1 to 4, wherein the composite particles(50) further include a carbon coating disposed on the silicon-containing coating(70) .

6. The anode active material for a lithium secondary battery according to claim 5, wherein the carbon coating includes at least one selected from the group consisting of amorphous carbon and a conductive polymer.

7. The anode active material for a lithium secondary battery according to any one of claims 1 to 6, wherein the pores(65) of the carbon-based particles(60) have a shape which is recessed from the outermost portion of the carbon-based particles(60) into an interior of the carbon-based particles(60).

8. A lithium secondary battery comprising:
an anode(130) including the anode active material for a lithium secondary battery according to any one of claims 1 to 7; and
a cathode(100) disposed opposite the anode(130).

9. A method for preparing an anode active material for a lithium secondary battery comprising:
preparing carbon-based particles(60) including pores(65); and
calcining the carbon-based particles(60) and the silicon-containing gas three times at different temperatures to form composite particles(50) including a silicon-containing coating(70) formed on the surface of the carbon-based particles(60),
wherein the ratio of oxygen atoms to silicon atoms (O/Si atomic ratio), measured by X-ray photoelectron spectroscopy (XPS) analysis at a depth of 100 nm from the surface toward the center of the composite particles(50), is 0.13 to 0.6.

10. The method for preparing an anode active material for a lithium secondary battery according to claim 9, wherein the silicon-containing gas includes silane gas.

11. The method for preparing an anode active material for a lithium secondary battery according to claims 9 or 10, wherein the calcination includes a first calcination, a second calcination performed at a higher temperature than the first calcination, and a third calcination performed at a higher temperature than the second calcination.

12. The method for preparing an anode active material for a lithium secondary battery according to claim 11, wherein the first calcination, second calcination, and third calcination are performed sequentially.

13. The method for preparing an anode active material for a lithium secondary battery according to claims 11 or 12, wherein the first calcination is performed at 400 °C to 450 °C.

14. The method for preparing an anode active material for a lithium secondary battery according to any one of claims 11 to 13, wherein the second calcination is performed at 500 °C to 550 °C.

15. The method for preparing an anode active material for a lithium secondary battery according to any one of claims 11 to 14, wherein the third calcination is performed at 600 °C to 650 °C.
